# EUROPEAN PATENT APPLICATION

(11) **EP 4 378 903 A1**
(43) Date of publication of application: **05.06.2024**
(21) Application number: 22849839.0
(22) Date of filing: 25.07.2022
(51) Int. Cl.: C03C 10/00, C03C 3/097, C03B 27/012

(54) **METHOD FOR MANUFACTURING GLASS CERAMIC SUBSTRATE AND GLASS CERAMIC SUBSTRATE MANUFACTURED THEREBY**

(30) Priority: 26.07.2021 KR 20210098107
(71) Applicant: Hass Co., Ltd., Gangwon-do 25452 (KR)
(72) Inventor: LIM, Hyung Bong, Ansan-si Gyeonggi-do 15521 (KR); KIM, Yong Su, Gangneung-si Gangwon-do 25497 (KR)
(74) Representative: Gulde & Partner
(86) International application number: PCT/KR2022/010908
(87) International publication number: WO 2023/008863

(57) **Abstract**

The present invention relates to a method for manufacturing a glass-ceramic substrate and a glass-ceramic substrate manufactured thereby, the method comprising a step of manufacturing a predetermined-shaped substrate from a specific bulk glass composition, followed by heat treatment step. In the method, the heat treatment step is performed by one method selected from: a) a first heat treatment step performed by a method of raising and maintaining the temperature within a maximum temperature range of 500°C to 650°C (exclusive); b) a second heat treatment step performed by a method of raising and maintaining the temperature within a maximum temperature range of 650°C to 700°C (exclusive); c) a third heat treatment step performed by a method of raising and maintaining the temperature within a maximum temperature range of 700°C to 800°C (exclusive); and d) a fourth heat treatment step performed by a method of raising and maintaining the temperature within a maximum temperature range of 800°C to 870°C, whereby the method is capable of easily manufacturing several types of glass-ceramic substrates with various combinations of flexural strength and light transmittance.

## Description

### Technical Field

The present invention relates to a method for manufacturing a glass-ceramic substrate and a glass-ceramic substrate manufactured thereby. More particularly, the present invention relates to a method for easily manufacturing glass-ceramic substrates having various combinations of flexural strength and light transmittance from a particular bulk glass composition and to a glass-ceramic substrate manufactured thereby.

### Background Art

Glass substrates or glass-ceramic substrates have a wide range of applications, including display applications, interactive input elements, covers, hard disks, household applications, medical applications, and pharmaceutical applications.

For example, Japanese Patent Registration No. 6843743 discloses a coated glass substrate or glass ceramic substrate having multifunctional surface properties, including a combination of antimicrobial properties, anti-reflective properties, and anti-print properties, wherein an anti-reflective coating is present on a glass substrate or glass ceramic substrate, and the glass substrate or glass ceramic substrate and the anti-reflective coating present thereon are ion-exchanged. In addition, an anti-fingerprint coating is present on the ion-exchanged anti-reflective coating on the glass substrate or glass ceramic substrate. In addition, the exchanged ions are one or more metal ions having antimicrobial activity, or one or more metal ions having antimicrobial activity and ions providing chemical reinforcing. In addition, the coated glass substrate or glass ceramic substrate has an antimicrobial effect of greater than 99% against Escherichia coli and Staphylococcus aureus when measured in accordance with the standards of JIS Z 2801 or ISO 22196. In the document, the glass is described as an ion-exchangeable glass, which may be an alkaline aluminosilicate glass, a borosilicate glass, a soda-lime glass, an alkali-free aluminum silicate glass, a leaded glass, or a lithium aluminosilicate glass, and the glass ceramic is described as an ion-exchangeable glass ceramic selected from a ceramicized aluminosilicate glass or a lithium aluminosilicate glass. It is further disclosed that the glass substrates or glass ceramic substrates may be used, for example, as cover glasses for a variety of screens, including touchscreens of electronic devices and a number of devices used in households or industrial areas, such as cell phones, smartphones, tablet PCs, notebook PCs, television sets, ATM machines, automatic ticket vending machines, and that the glasses substrates or glass ceramic substrates may be used as control-, information- and/or operating-boards or windows of any shape and size used, for example, in automobiles, hospitals, museums, shops, and home construction and at transportation sites. The document also states that the substrates can be used in applications provided with many functions, for example, on the touch screen of a smartphone or tablet PC.

Glass or glass-ceramic substrates can be reinforced by post-processing, such as ion implantation, and the reinforced glass or glass-ceramic substrates may be applied to electronic devices as housings, displays, and cover substrates. For example, the glass or glass-ceramic substrate may be provided on or near the front surface of a display housing, and the cover substrate may be provided on or over the front surface of the housing and over a display device.

U.S. Patent Application Publication No. 2017-0369989 discloses a glass or glass-ceramic substrate including at least one ion-implanted surface, in which the ion-implanted glass or glass-ceramic article is characterized by having an ultimate indentation fracture threshold (IFT) load of at least 650 g.

Japanese Patent Application Publication No. 2014-136668 discloses a crystalline glass substrate and a crystallized glass substrate. The document particularly discloses a crystalline glass substrate used for organic EL illumination, in which the glass substrate has a glass composition containing 40% to 80% of SiO₂, 10% to 35% of Al₂O₃, and 1% to 10% of Li₂O, and more specifically containing 55% to 73% by mass of SiO₂, 17% to 27% by made of Al₂O₃, 2% to 5% by mass of Li₂O, 0% to 1.5% by mass of MgO, 0% to 1.5% by mass of ZnO, 0% to 1% by mass of Na₂O, 0% to 1% by mass of K₂O, 0% to 3.8% by mass of TiO₂, 0% to 2.5% by mass of ZrO₂, and 0% to 0.6% by mass of SnO₂. These glass substrates can be formed by a rolling-out or floating method, and crystallized glass substrates made by heat treatment of the crystalline glass substrates are also disclosed. The document discloses that the main crystalline phase of the crystalline glass substrate thus obtained is a β-quartz solid solution or β-spodumene solid solution and the crystalline glass substrate is useful as a diffuser plate in lighting devices.

Korean Patent Application Publication No. 2013-0009796 discloses a glass-ceramic product with bulk scattering properties and uses thereof in OLED or photovoltaic applications. The document discloses that the glass-ceramic substrate is used instead of an organic substrate to allow scattering by the particles of suitable sizes and refractive indexes. As an example, the glass-ceramic has a composition containing, by weight, 0% to 3% of Li₂O, 15% to 27% of Al₂O₃, 60% to 85% of SiO₂, and 1% or more of SnO₂, in which the glass ceramic has a diffuse transmittance of 20% or more at 400 to 1200 nm, and the glass ceramic is a bulk crystalline glass ceramic.

On the other hand, low-expansion transparent glass-ceramics may be useful as substrates for optical waveguide devices. Low-expansion transparent glass-ceramics are disclosed in Korean Patent Application Publication No. 2002-0003502, in which the glass-ceramics are obtained by heat-treating base glass obtained at a melting point of 1530°C or below. The low-expansion transparent glass-ceramics have an average linear thermal expansion coefficient (α) within the range of 6×10⁻⁷/°C to +35×10⁻⁷/°C at a temperature in the range of 100°C to 300°C and an 80% transmission wavelength (T80) of 700 nm or less.

On the other hand, the glass or glass-ceramics can be optically structured by etching after exposure and can be applied to optical members and systems. The glass or glass-ceramics may be so-called photosensitive glass or photosensitive glass-ceramics. In this regard, Korean Patent No. 1934157 discloses a sensitized photosensitive glass and a manufacturing method thereof, and proposes a glass that is suitable for processing and continuous manufacturing in modern glass processing methods while not having inferior crystallinity and photosensitivity to the prior art glasses.

From the perspective of providing a glass-ceramic substrate having a variety of applications, the present invention has been made to provide a method for manufacturing a glass-ceramic substrate that can implement various required properties in consideration of the intended uses from a single bulk glass composition.

### Disclosure

### Technical Problem

The present invention is to provide a method for manufacturing glass-ceramic substrates with various combinations of light transmission and flexural strength from a single bulk glass composition.

The present invention is to provide glass-ceramic substrates with various combinations of light transmittance and flexural strength.

The present invention is to provide a method of using the glass-ceramic substrate as a base plate to manufacture a reinforced glass-ceramic substrate by ionic reinforcing or chemical reinforcing.

### Technical Solution

One embodiment of the present invention provides a method of manufacturing a glass-ceramic substrate, the method including: making a substrate having a predetermined shape by melting, shaping, and cooling a glass composition containing, by weight, 65.0% to 75% of SiO₂, 10.0% 13.5% of Li₂O, 5% to 9% of Al₂O₃, 0.5% to 1.0% of ZnO, 1.5% 3.5% of K₂O, 0% to 2.0% of CaO, and 2.5% to 4.0% of P₂O₅ and satisfying an SiO₂/Li₂O₃ molar ratio of 2.30 to 3.50 and a SiO₂/Al₂O₃ molar ratio of 14.50 to 20.50 and performing annealing at a predetermined rate from 480°C to 250°C for a duration of 20 minutes to 2 hours; and
heat-treating the substrate having the predetermined shape,
in which the heat-treating is performed by one method selected from a) a first heat treatment step performed by a method of raising and maintaining the temperature within a maximum temperature range of 500°C to 650°C (exclusive); b) a second heat treatment step performed by a method of raising and maintaining the temperature within a maximum temperature range of 650°C to 700°C (exclusive); c) a third heat treatment step performed by a method of raising and maintaining the temperature within a maximum temperature range of 700°C to 800°C (exclusive); and d) a fourth heat treatment step performed by a method of raising and maintaining the temperature within a maximum temperature range of 800°C to 870°C.

In the method according to a preferred embodiment, in the heat-treating step, the raising may be performed at an increase rate of 0.1°C/min to 30°C/min, and the maintaining may be performed at the maximum temperature of the temperature range for at least 10 minutes.

Another embodiment of the present invention provides a glass-ceramic substrate manufactured by performing the a) first heat treatment step of the method according to the preferred embodiment described above, in which the glass-ceramic substrate may include a crystalline phase in an amorphous glass matrix, and the crystalline phase may include lithium methacrylate.

The glass-ceramic substrate may have a crystallinity of 10% to 30%.

A further embodiment of the present invention provides a glass-ceramic substrate manufactured by performing the b) second heat treatment step of the method according to the preferred embodiment described above, in which the glass-ceramic substrate may include a crystalline phase in an amorphous glass matrix, and the crystalline phase may include lithium methacrylate and virgilite.

The glass-ceramic substrate may have a crystallinity of 20% to 40%.

A yet further embodiment of the present invention provides a glass-ceramic substrate manufactured by performing the C) third heat treatment step of the method according to the preferred embodiment described above, in which the glass-ceramic substrate may contain a crystalline phase in an amorphous glass matrix, and the crystalline phase may include lithium methacrylate, virgilite, and lithium disilicate.

The glass-ceramic substrate may have a crystallinity of 40% to 60%.

A glass-ceramic substrate according to a specific embodiment of the present invention is manufactured by the method according to one of the embodiments described above, and in the c) third heat treatment step of the method, the temperature is increased in a range of from 700°C to 800°C, whereby the lithium disilicate crystalline phase may be grown.

The glass-ceramic substrate may have a crystallinity of 60% to 90%.

A further embodiment of the present invention provides a glass-ceramic substrate manufactured by performing the d) fourth heat treatment step of the method according to the preferred embodiment described above, in which the glass-ceramic substrate may include a crystalline phase in an amorphous glass matrix, and the crystalline phase may include lithium disilicate and spodumene.

The glass-ceramic substrate may have a crystallinity of 58% to 80%.

The glass-ceramic substrates according to the embodiments satisfy a light transmittance of at least 60% at a wavelength of 550 nm.

The glass-ceramic substrates according to the embodiments may satisfy a biaxial flexural strength of at least 120 MPa.

According to one embodiment of the present invention, a glass-ceramic substrate having a light transmittance of 80% to 82% at a wavelength of 550 nm and a biaxial flexural strength of 100 to 140 MPa may be provided.

According to one embodiment of the present invention, a glass-ceramic substrate having a light transmittance of 75% to 82% at a wavelength of 550 nm and a biaxial flexural strength of 130 to 170 MPa may be provided.

According to one embodiment of the present invention, a glass-ceramic substrate having a light transmittance of 70% to 75% at a wavelength of 550 nm and a biaxial flexural strength of 200 to 250 MPa may be provided.

According to one embodiment of the present invention, a glass-ceramic substrate having a light transmittance of 65% to 73% at a wavelength of 550 nm and a biaxial flexural strength of 280 to 320 MPa may be provided.

According to one embodiment of the present invention, a glass-ceramic substrate having a light transmittance of 60% to 65% at a wavelength of 550 nm and a biaxial flexural strength of 330 to 370 MPa may be provided.

In the glass-ceramic substrates according to the embodiments of the present invention, the lithium methacrylate or lithium disilicate of the crystalline phase may have a size of 10 nm to 200 nm and the virgilite or spodumene may have a size of 30 nm to 2 pm.

In one embodiment of the present invention, there is provided a reinforced glass-ceramic substrate, including the glass-ceramic substrate according to one of the embodiments described above.

The reinforced glass-ceramic substrate according to one embodiment may be obtained by chemically or ionically reinforcing a ceramic substrate.

### Advantageous Effects

According to the present invention, a method that can easily manufacture glass-ceramic substrates with various combinations of light transmittance and flexural strength from a single bulk glass composition can be provided, and glass-ceramic substrates with various combinations of light transmittance and flexural strength can be provided. The glass-ceramic substrates can be used as base plates, and the base plates are chemically or ionically strengthened to provide glass-ceramic substrates with various strengthened properties.

### Description of Drawings

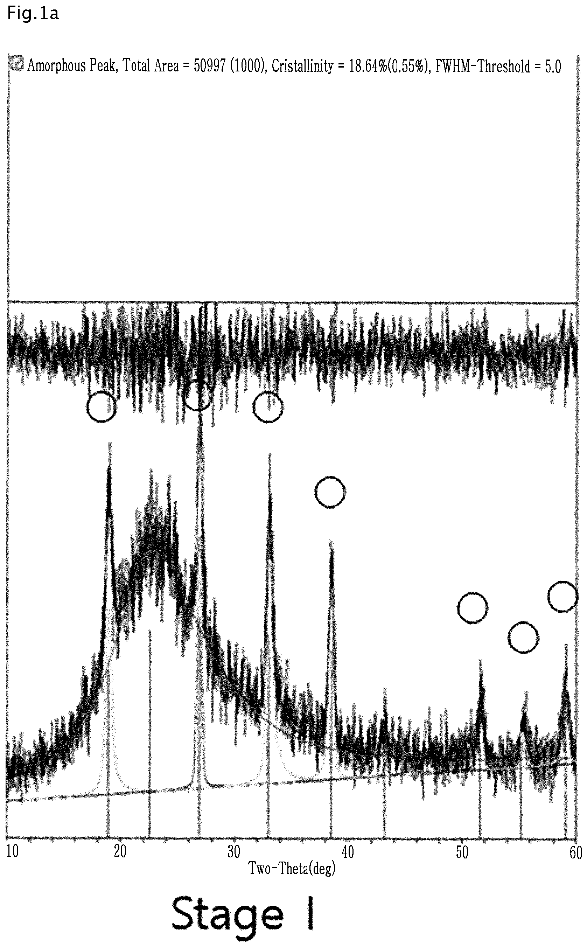

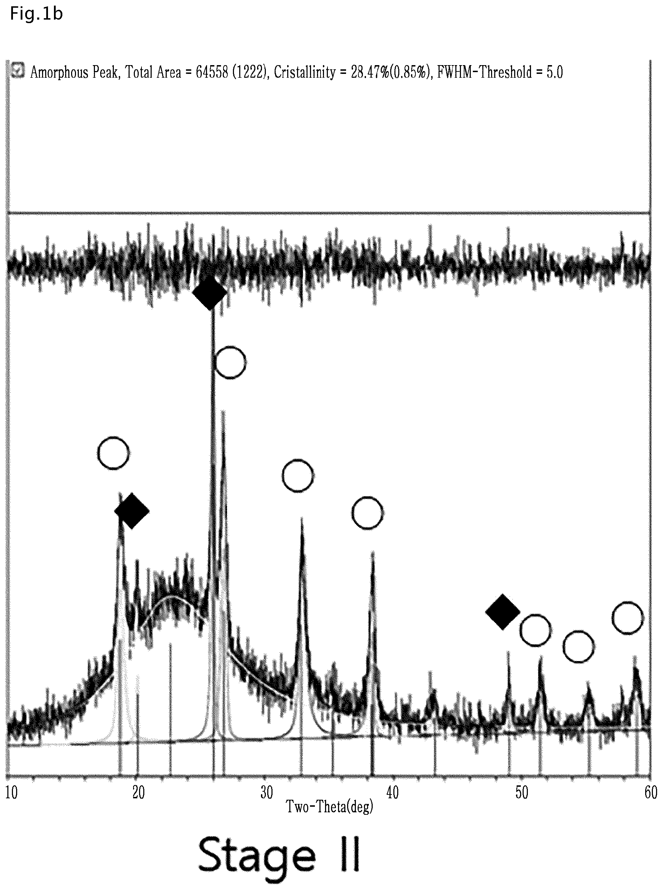

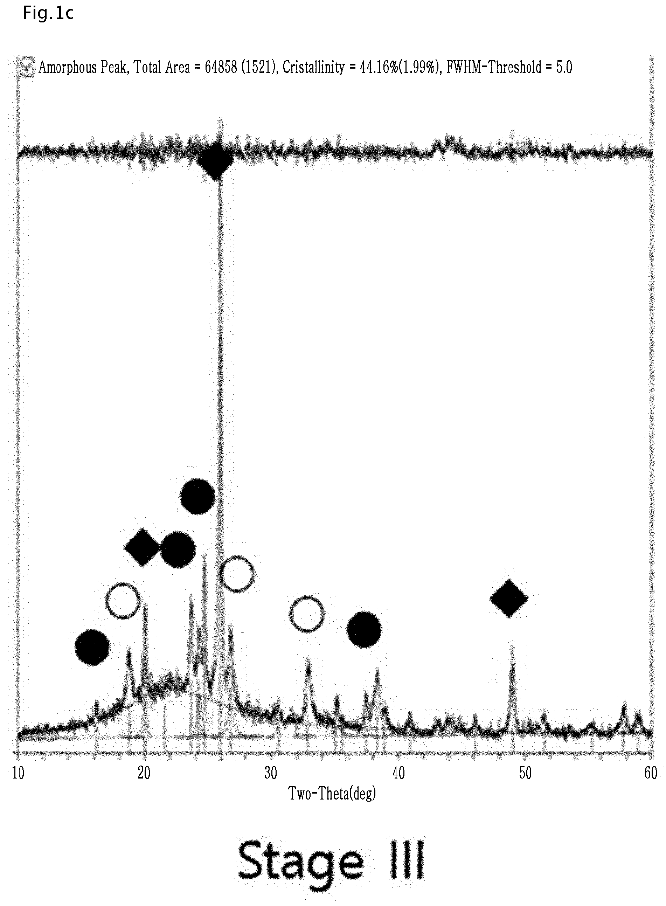

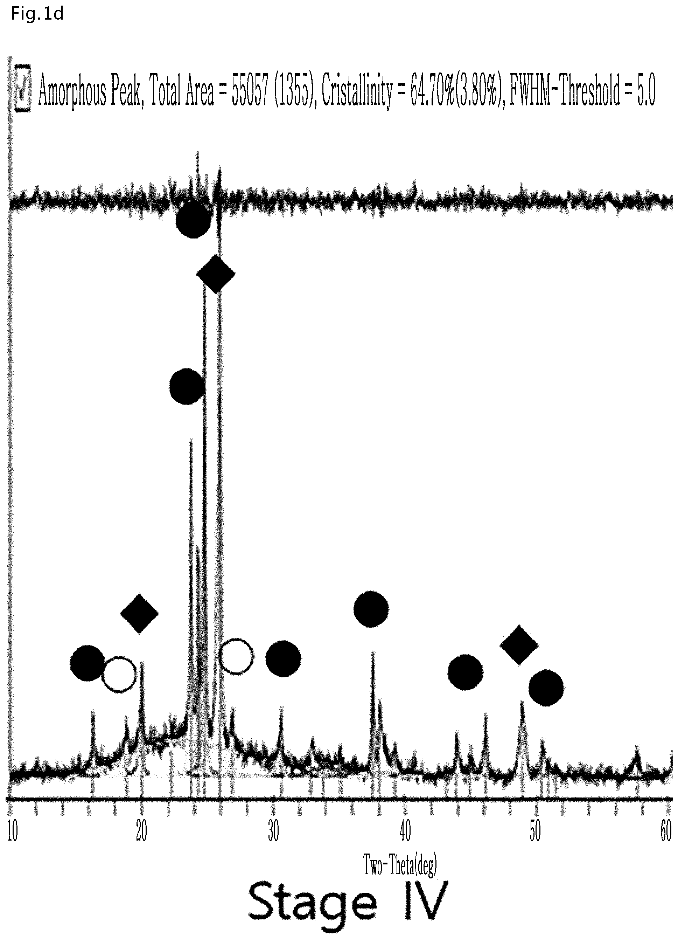

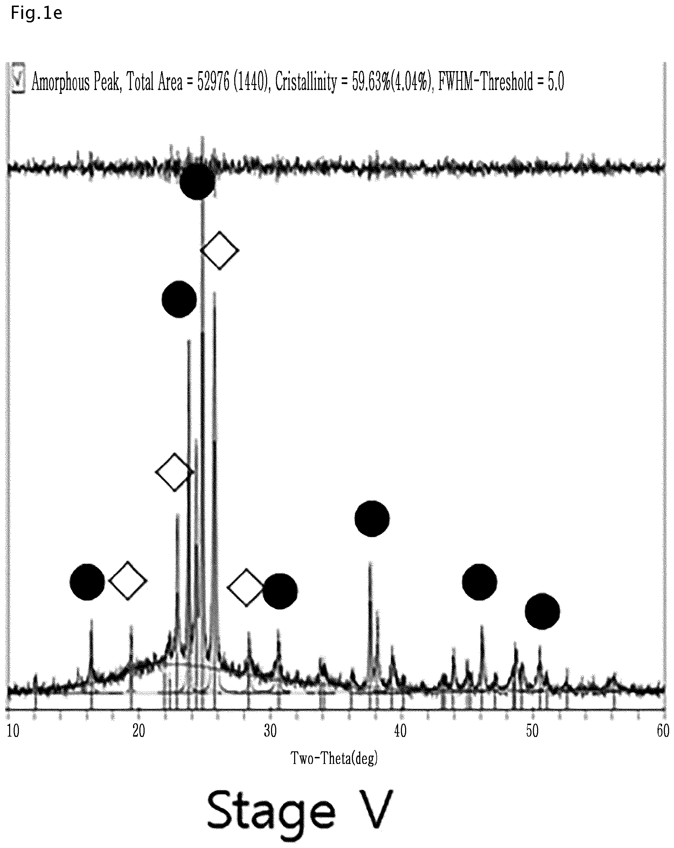

FIGS. 1a to 1e are graphs showing X-ray diffraction (XRD) results of products having undergone respective heat treatment stages performed under different heat treatment conditions during a manufacturing process of the present invention, in which FIG. 1a shows a graph of a heat treatment result for stage I, FIG. 1b shows a graph of a heat treatment result for stage II, FIG. 1c shows a graph of a heat treatment results for stage III, FIG. 1d is a graph of a heat treatment result for stage IV, and FIG. 1e is a graph of a heat treatment result for stage V, wherein in all the graphs, ∘ denotes Li₂O·SiO₂, • denotes Li₂O-2SiO₂, ◇ denotes Li₂O·Al₂O₃·4SiO₂, and * denotes Li₂O·Al₂O₃·10SiO₂.
FIG. 2 is a schematic representation illustrating changes in crystalline phase according to heat treatment stages performed under different heat treatment conditions during the manufacturing process of the present invention.
FIG. 3 shows scanning electron microscopy (SEM) images of the products having undergone the respective heat treatment stages performed under different heat treatment conditions during the manufacturing process of the present invention.
FIG. 4 shows visible light transmittance graphs of the products having undergone the respective heat treatment stages performed under different heat treatment conditions during the manufacturing process of the present invention (for samples with a thickness of 1.2 mm).
FIG. 5 shows biaxial flexural strength graphs of the products having undergone the respective heat treatment stages performed under different heat treatment conditions during the manufacturing process of the present invention.

### Best Mode

The foregoing and other aspects of the present disclosure will become more clearly apparent through preferred embodiments described with reference to the accompanying drawings. Hereinafter, embodiments of the present disclosure will be described in detail such that those skilled in the art can easily understand and reproduce them.

The present invention has been made on the basis of the discovery that when heat-treating a specific bulk glass composition while varying heat treatment conditions, lithium methacrylate is initially formed within a glass matrix at the lowest temperature, followed by the formation of virgilite at an elevated temperature level, then followed by the formation of lithium disilicate at a further elevated temperature level, and followed by the formation of spodumene at a still further elevated temperature level. It has also been found that the heat treatment stages produce different products (crystal phases), whereby different combinations of flexural strength and light transmittance can be obtained from the same glass composition.

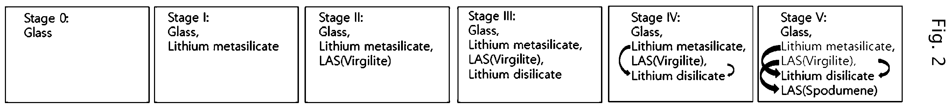

The stage-by-stage changes in crystalline phase are illustrated in a simplified manner in FIG. 2.

Specifically, one embodiment of the present invention provides a glass-ceramic substrate manufacturing method including: making a substrate having a predetermined shape by melting, shaping, and cooling a glass composition containing, by weight, 65.0% to % of SiO₂, 10.0% 13.5% of Li₂O, 5% to 9% of Al₂O₃, 0.5% to 1.0% of ZnO, 1.5% 3.5% of K₂O, 0% to 2.0% of CaO, and 2.5% to 4.0% of P₂O₅ and having an SiO₂/Li₂O₃ molar ratio of 2.30 to 3.50 and a SiO₂/Al₂O₃ molar ratio of 14.50 to 20.50; and
heat-treating the substrate having the predetermined shape,
in which the heat-treating is performed by one method selected from a) a first heat treatment step performed by a method of raising and maintaining the temperature within a maximum temperature range of 500°C to 650°C (exclusive); b) a second heat treatment step performed by a method of raising and maintaining the temperature within a maximum temperature range of 650°C to 700°C (exclusive); c) a third heat treatment step performed by a method of raising and maintaining the temperature within a maximum temperature range of 700°C to 800°C (exclusive); and d) a fourth heat treatment step performed by a method of raising and maintaining the temperature within a maximum temperature range of 800°C to 870°C.

In the manufacturing method according to one embodiment of the present invention described above and below, the glass composition is a glass composition containing, by weight, 65.0% to 75% of SiO₂, 10.0% 13.5% of Li₂O, 5% to 9% of Al₂O₃, 0.5% to 1.0% of ZnO, 1.5% 3.5% of K₂O, 0% to 2.0% of CaO, and 2.5% to 4.0% of P₂O₅ and satisfying an SiO₂/Li₂O₃ molar ratio of 2.30 to 3.50 and a SiO₂/Al₂O₃ molar ratio of 14.50 to 20.50. On the other hand, there is no limitation on the other components described herein, and of course, the glass composition may contain an oxide such as Na₂O, MgO, or CeO₂.

When the glass composition containing, by weight, 65.0% to 75% of SiO₂, 10.0% 13.5% of Li₂O, 5% to 9% of Al₂O₃, 0.5% to 1.0% of ZnO, 1.5% 3.5% of K₂O, 0% to 2.0% of CaO, and 2.5% to 4.0% of P₂O₅ and satisfying an SiO₂/Li₂O₃ molar ratio of 2.30 to 3.50 and a SiO₂/Al₂O₃ molar ratio of 14.50 to 20.50 is made into a substrate having a predetermined shape and crystalized through heat treatment, a crystalline phase of lithium methacrylate begins to form at about 500°C (referred to as stage I), and phase transitions to lithium disilicate and lithium aluminum silicate (LAS) are completed at about 800°C. Virgilite classified as the LAS forms at about 650°C (referred to as stage II) and a phase transition to spodumene is completed at about 800°C. Lithium disilicate begins to form at about 700°C (referred to as stage III), followed by continuous crystal growth at the elevated temperatures (referred to as stage IV), and remelting to a glassy phase begins to occur at about 870°C. The spodumene classified as the LAS begins to form at about 800°C by phase transition from virgilite (referred to as stage V) .

In this aspect, a glass-ceramic substrate manufacturing method according to one embodiment of the present invention is performed by: making a substrate having a predetermined shape from a glass composition containing, by weight, 65.0% to 75% of SiO₂, 10.0% to 13.5% of Li₂O, 5% to 9% of Al₂O₃, 0.5% to 1.0% of ZnO, 1.5% to 3.5% of K₂O, 0% to 2.0% of CaO, and 2.5% to 4.0% of P₂O₅ and satisfying a SiO₂/Li₂O₃ molar ratio of 2.30 to 3.50 and a SiO₂/Al₂O₃ molar ratio of 14.50 to 20.50; and heat-treating the substrate to crystallize the glass substrate, in which the heat-treating is selectively performed by one method selected from a) a first heat treatment step performed by a method of raising and maintaining the temperature within a maximum temperature range of 500°C to 650°C (exclusive); b) a second heat treatment step performed by a method of raising and maintaining the temperature within a maximum temperature range of 650°C to 700°C (exclusive); c) a third heat treatment step performed by a method of raising and maintaining the temperature within a maximum temperature range of 700°C to 800°C (exclusive); and d) a fourth heat treatment step performed by a method of raising and maintaining the temperature within a maximum temperature range of 800°C to 870°C.

The a) first heat treatment step may be a method of implementing stage I, the b) second heat treatment step may be a method of implementing stage II, the c) third heat treatment step may be a method of implementing stages III and IV, and the d) fourth heat treatment step may be a method of implementing stage V.

In particular, in the c) third heat treatment step, in the case of heat-treating in the range of 700°C to 800°C (exclusive), stage III can be implemented when the temperature is low, and stage IV can be implemented as the temperature increases.

Each of the heat treatment steps can be performed by seamlessly raising the temperature up to the desired maximum temperature and maintaining the desired maximum temperature. Alternatively, each of the heat treatment steps may be performed by raising the temperature in stepwise through multiple sessions (multi-step heat-treatment method), and the maximum temperature for each heat treatment session is maintained for a predetermined period of time until the desired maximum temperature is reached.

However, the heat treatment method is not limited thereto. For example, for the second heat treatment step, a first heat treatment session may be performed in the range of 500°C to 650°C (exclusive) for a predetermined period of time, the temperature is then raised, and a second heat treatment session may be performed in the range of 650°C to 700°C (exclusive). Similarly, for example, for the third heat treatment step, a first heat treatment session may be performed in the range of 500°C to 650°C (exclusive) for a predetermined period of time, a second heat treatment session may be performed in the range of 650°C to 700°C (exclusive) for a predetermined period of time, the temperature is then increased, and a third heat treatment session may be performed in the maximum temperature range of 700°C to 800°C (exclusive) for a predetermined period of time. Similarly, for the fourth heat treatment step, a first heat treatment session may be performed in the range of 500°C to 650°C (exclusive) for a predetermined period of time, a second heat treatment session may be performed in the range of 650°C to 700°C (exclusive) for a predetermined period of time, a third heat treatment session may be performed in the range of 700°C to 800°C (exclusive) for a predetermined period of time, and a fourth heat treatment session may be performed in the maximum temperature range of 800°C to 870°C for a predetermined period of time.

In the heat treatment step of the glass-ceramic substrate manufacturing method according to the preferred embodiment, the temperature raising may be performed under a condition that in which the temperature increase rate is in the range of 0.1°C/min to 30°C/min, and the temperature maintaining may be performed at the maximum temperature of the temperature range for at least 10 minutes.

More specifically, the holding time for each temperature zone is preferably at least 10 minutes and at most 6 hours, and the temperature increate rate is suitably in the range of 0.1°C/min to 30°C /min/min. When the temperature holding time is excessively short or the temperature increase rate is excessively fast, since the crystallization time is short, the content of the crystalline phase is relatively low compared to the glass, and crystals with a less content of SiO₂ may be generated among the LAS-based crystalline phases. That is, since it is too short for ions to migrate from glass, a large amount of ions do not contribute to the formation of crystals and may remain in the glass. In this case, the glass-ceramic substrate may have poor strength due to immature crystals.

### Mode for Carrying out the Invention

In a specific example of the present invention, 65.0% to 75% of SiO₂, 10.0% to 13.5% of Li₂O, 5% to 9% of Al₂O₃, 0.5% to 1.0% of ZnO, 1.5% to 3.5% of K₂O, 0% to 2.0% of CaO, and 2.5% to 4.0% of P₂O₅ were weighed and mixed to prepare a glass composition. In the glass composition, a molar ratio of SiO₂ to Li₂O₃ was in the range of 2.30 to 3.50, and a molar ratio of SiO₂ to Al₂O₃ were in the range of 14.50 to 20.50.

In the glass composition, when the molar ratio of SiO₂ to Li₂O₃ satisfies the range 2.30 to 3.50, and the molar ratio of SiO₂ to Al₂O₃ satisfies the range of 14.50 to 20.50, it may be desirable in terms that a lithium silicate-based crystalline phase, an LAS-based crystalline phase, and an intended crystalline phase such as virgilite or spodumene among the LAS-based crystalline phases can be obtained.

The glass composition may contain Li₂CO₃ instead of Li₂O. Carbon dioxide (CO₂) in Li₂CO₃ is released and removed as a gas in a glass melting process. In addition, K₂CO₃ and Na₂CO₃ may be added instead of K₂O and Na₂O as alkali oxides. Carbon dioxide (CO₂), which a carbon component (C) from K₂CO₃ and Na₂CO₃, will escape as a gas in the glass melting process.

The mixing may be performed by a dry mixing process, and ball milling may be used as the dry mixing process. The ball milling process will be described in detail. Starting materials are charged into a ball milling machine, and the ball mill is rotated at a constant speed to mechanically pulverize and uniformly mix the starting materials. The balls used in the ball mill may be balls made of a ceramic material such as zirconia or alumina, and the balls may have the same size or may have at least two different sizes. Depending on the target particle size, the sizes of the balls, the milling time, and the rotation speed per minute of the ball mill are controlled. For example, to achieve the target particle size, the size of the balls may be set in a range of about 1 mm to 30 mm, and the rotational speed of the ball mill may be set in a range of about 50 to 500 rpm. Ball milling is preferably performed for 1 to 48 hours depending on the target particle size. Through the ball milling, the starting materials are pulverized into fine particles having a uniform particle size, and the particles are uniformly mixed.

The mixed starting materials are placed in a melting furnace, and the melting furnace containing the starting materials is heated to melt the starting materials. In this context, the term "melting" is transformation of the starting materials from a solid state to a liquid, viscous state of matter. The melting furnace is preferably made of a material having a high melting point, high strength, and a low contact angle in order to suppress the sticking of the melt. To this end, the melting furnace is preferably made of platinum (Pt), diamond-like-carbon (DLC), or chamotte or is preferably coated with platinum (Pt) or diamond-like-carbon (DLC).

The melting is preferably performed at a temperature in the range of 1,400°C to 2,000°C under normal pressure for 1 to 12 hours. When the melting temperature is lower than 1,400°C, the starting materials may not be completely melted. When the melting temperature exceeds 2,000°C, it is not economical because excessive energy is consumed. Therefore, it is preferable that the melting is performed at a temperature in the above-mentioned range. In addition, when the melting time is excessively short, the starting materials cannot sufficiently melt whereas when the melting time is excessively long, energy is wasted, whereby it is not economical. It is preferable that the temperature increase rate of the melting furnace is about 5°C/min to 50°C/min. When the temperature increase rate of the melting furnace is excessively low, it takes a long time to melt the starting materials, resulting in reduction in productivity. On the other hand, when the temperature increase rate of the melting furnace is excessively high, the amount of volatilization of the starting materials may increase due to a rapid temperature increase, resulting in deterioration of the physical properties of the crystallized glass. Therefore, it is preferable to raise the temperature of the melting furnace at a temperature increase rate in the above-described range. The melting may be preferably performed in an oxidizing ambient such as oxygen (O₂) or air.

The melt is molded and cooled to produce a predetermined substrate having the desired shape and size. After the cooling, the substrate may undergo an annealing step in which the temperature slowly decreases from 480°C to 250°C for a period of 20 minutes to 2 hours. This annealing step reduces the stress variation in the molded article, preferably to the point where no stress is present, which can have a desirable effect on the size control of the crystalline phase and the homogeneity improvement of the crystal distribution in the subsequent crystallization step, and ultimately results in the production of the desired glass-ceramic substrate.

Herein, the predetermined rate is preferably in the range of 2.3°C/min to 14°C/min in terms of providing sufficient annealing.

The annealed molded article is then transferred to a crystallization kiln for selective heat treatment steps, such as those described above, to produce glass-ceramic substrates.

By using the glass-ceramic substrate manufacturing method of the present invention, it is possible to easily provide a glass-ceramic substrate including various crystalline phases or various combinations of crystalline phases. For example, by performing a) a first heat treatment step in the manufacturing method according to one embodiment, it is possible to provide a glass-ceramic substrate including a crystalline phase in an amorphous glass matrix, in which the crystalline phase is lithium methacrylate.

This glass-ceramic substrate may be obtained through a crystallization stage, which is referred to as stage I, as can be confirmed from the XRD analysis in FIG. 1.

In the above and following descriptions, the XRD analysis is to be understood as the result of analysis using an X-ray diffraction analyzer (D/MAX-2500, Rigaku, Japan; Cu Kα (40 kV, 60 mA), scanning speed: 6° min, 20: 10 to 60 (degrees), Rigaku, Japan).

In the manufacturing method according to one embodiment described above, the glass-ceramic obtained by performing a) the first heat treatment step may have a crystallinity of 10% to 30%.

In the above and following descriptions, the term "crystallinity" is to be understood as the weight fraction of the crystalline phase relative to the glass matrix.

Such a glass-ceramic substrate may satisfy a light transmittance of at least 60% at a wavelength of 550 nm and may satisfy a biaxial flexural strength of at least 120 MPa.

In the above and following descriptions, the light transmittance is to be understood as measurements obtained with the use of a UV-visible spectrometer (UV-2401PC, Shimadzu, Japan).

More specifically, this glass-ceramic substrate may have a light transmittance of 80% to 82% at a wavelength of 550 nm and a biaxial flexural strength of 100 to 140 MPa.

In the above and following descriptions, the light transmittance is defined as the value based on a sample thickness of 1.2 mm.

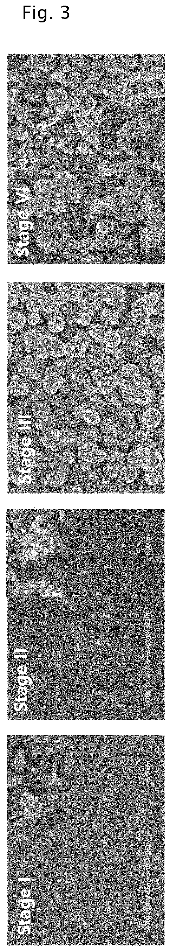

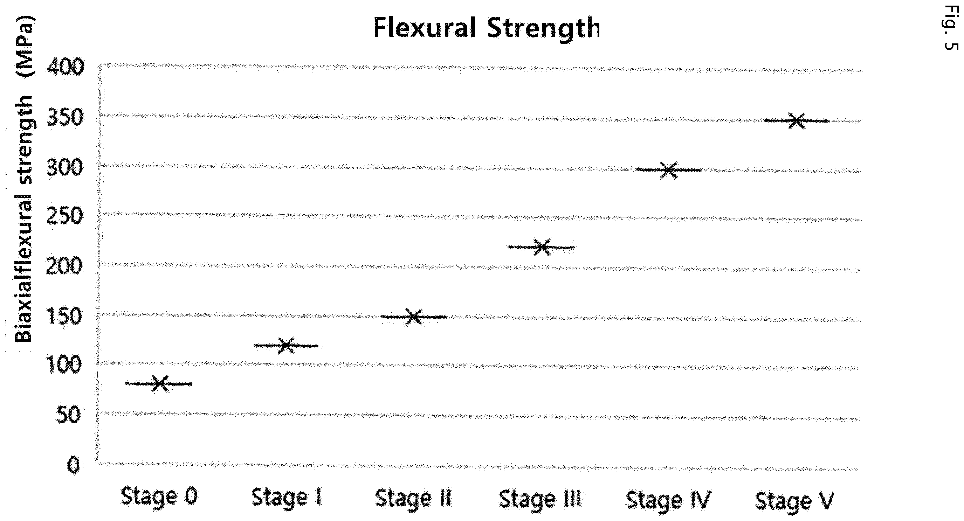

FIG. 3 shows SEM images of glass-ceramic substrate samples according to one embodiment, and FIG. 5 is a graph showing biaxial flexural strength results.

Glass-ceramic substrates with high transmittance and weak flexural strength exhibit low thermal expansion. Therefore, these glass-ceramic substrates are suitably used as insulating substrates rather than display covers.

However, when such a glass-ceramic substrate is used as a base plate to manufacture a reinforced glass-ceramic substrate by using a method such as chemical or ionic reinforcing, the transmittance or strength characteristics of the reinforced glass-ceramic substrate can be changed depending on the reinforcing method. Therefore, the use of the glass-ceramic substrate can be expanded to thin glass-ceramic products for display covers or hard coats.

A different type of glass-ceramic substrate that can be obtained by the glass-ceramic substrate manufacturing method according to the present invention is obtained by performing the b) second heat treatment step in the manufacturing method according to one embodiment described above. This type of glass-ceramic substrate may include a crystalline phase in an amorphous glass matrix, and the crystalline phase may be composed of lithium methacrylate and virgilite.

The type of glass-ceramic substrate may have a crystallinity of 20% to 40%.

This type of glass-ceramic substrate may be obtained through a crystallization stage, which is referred to as stage II, as can be confirmed from the XRD analysis results shown in FIG. 1.

This type of glass-ceramic substrate also satisfies a light transmittance of at least 60% at a wavelength of 550 nm and satisfies a biaxial flexural strength of at least 120 MPa.

More specifically, this type of glass-ceramic substrate can provide a glass-ceramic substrate having a light transmittance of 75% to 82% at a wavelength of 550 nm and a biaxial flexural strength of 130 to 170 MPa.

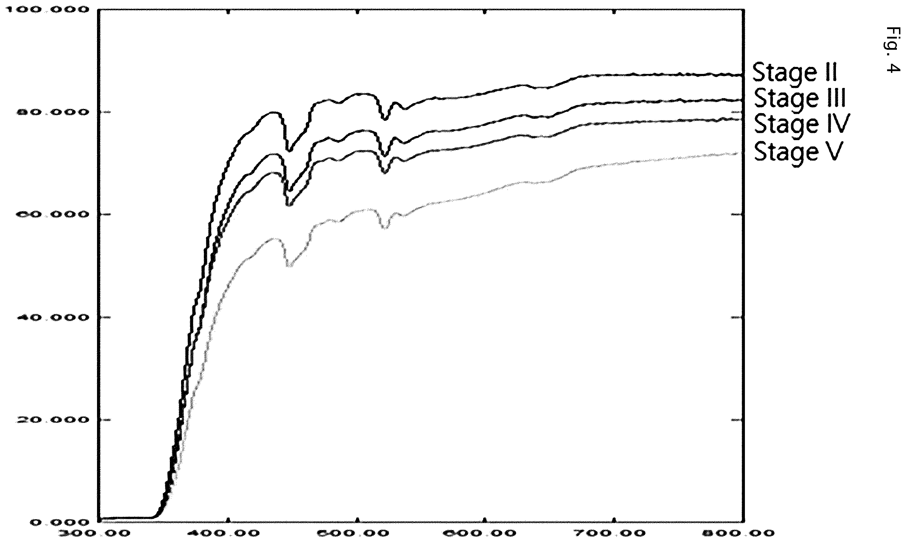

FIG. 3 shows SEM images of glass-ceramic substrate samples according to one embodiment, FIG. 4 is a graph showing the light transmittance, and FIG. 5 is a graph showing the biaxial flexural strength results.

These glass-ceramic substrates with high transmittance and weak flexural strength exhibit low thermal expansion. Therefore, these glass-ceramic substrates can be suitably used as insulating substrates rather than display covers.

However, when such a glass-ceramic substrate is used as a base plate to manufacture a reinforced glass-ceramic substrate by using a method such as chemical or ionic reinforcing, the light transmittance or strength characteristics of the reinforced glass-ceramic substrate can be changed depending on the reinforcing method. Therefore, the use of the glass-ceramic substrate can be expanded to a display cover or a thin glass-ceramic product for a hard-coating.

A further different type of glass-ceramic substrate that can be obtained by the glass-ceramic substrate manufacturing method according to the present invention is obtained by performing the c) third heat treatment step in the manufacturing method according to one embodiment described above. This type of glass-ceramic substrate may include a crystalline phase in an amorphous glass matrix, and the crystalline phase may be composed of lithium methacrylate, virgilite, and lithium disilicate.

This glass-ceramic substrate may have a crystallinity of 40% to 60%.

In the glass-ceramic substrate obtained by performing the c) third heat treatment in the manufacturing method according to one embodiment described above, the crystalline phase may be composed of lithium methacrylate, virgilite, and lithium disilicate. In the c) third heat treatment step, since the temperature is increased from 700°C to 800°C (exclusive), crystal growth of a lithium disilicate crystalline phase can be achieved.

When the crystalline growth of the lithium disilicate crystalline phase is achieved, the glass-ceramic substrate may have a crystallinity of 60% to 90%.

These glass-ceramic substrates according to the embodiments may also satisfy a light transmittance of at least 60% at a wavelength of 550 nm and may satisfy a biaxial flexural strength of at least 120 MPa.

More specifically, these glass-ceramic substrates can provide glass-ceramic substrates having a light transmittance of 70% to 75% at a wavelength of 550 nm and a biaxial flexural strength of 200 to 250 MPa.

These glass-ceramic substrates may be glass-ceramic substrates that can be obtained by heat treatment at a temperature of about 700°C within the temperature range of 700°C to 800°C (exclusive) in the c) third heat treatment step of the manufacturing method according to one embodiment described above. FIG. 3 shows SEM images of samples of glass-ceramic substrates according to one embodiment, FIG. 4 shows a graph of light transmittance, and FIG. 5 shows a graph of biaxial flexural strength results (denoted by stage III).

These glass-ceramic substrates can be confirmed from the XRD analysis results shown in FIG. 1.

Meanwhile, in the c) third heat treatment step, since the temperature is increased within the range of 700°C to 800°C (exclusive), crystal growth of the lithium disilicate crystalline phase can be achieved. More specifically, this glass-ceramic substrate can provide a glass-ceramic substrate having a light transmittance of 65% to 73% at a wavelength of 550 nm and a biaxial flexural strength of 280 to 320 MPa.

FIG. 3 shows SEM images of glass-ceramic substrate samples according to one embodiment, FIG. 4 is a graph showing the light transmittance, and FIG. 5 is a graph showing the biaxial flexural strength results (denoted by stage IV).

These glass-ceramic substrates can be confirmed from the XRD analysis results shown in FIG. 1.

In the case of the glass-ceramic substrate obtained by performing the c) third heat treatment step of the manufacturing method according to one embodiment described above, in which the glass-ceramic substrate includes lithium metasilicate, virgilite, and lithium disilicate crystalline phases, the resulting product of stage IV in which crystal growth of lithium disilicate occurs has a significantly improved flexural strength compared to the resulting product of stage III.

This glass-ceramic substrate can be more suitably used as a display cover substrate that requires enhanced strength, or as a thin (ultra-thin) glass-ceramic product for a hard-coating.

A yet different type of glass-ceramic substrate that can be obtained by the glass-ceramic substrate manufacturing method according to the present invention is obtained by performing the b) fourth heat treatment step in the manufacturing method according to one embodiment described above. This type of glass-ceramic substrate may include a crystalline phase in an amorphous glass matrix, and the crystalline phase may be composed of lithium disilicate and spodumene.

The glass-ceramic substrate may have a crystallinity of 58% to 80%.

These glass-ceramic substrates according to the embodiments may also satisfy a light transmittance of at least 60% at a wavelength of 550 nm and may satisfy a biaxial flexural strength of at least 120 MPa.

More specifically, a glass-ceramic substrate having a light transmittance of 60% to 65% at a wavelength of 550 nm and a biaxial flexural strength of 330 to 370 MPa can be provided.

FIG. 4 shows a graph of light transmittance of a sample of such a glass-ceramic substrate according to one embodiment, and FIG. 5 shows a graph of biaxial flexural strength results (denoted by stage V) .

As illustrated in FIG. FIG. 3, referring to the analysis results on the SEM images, lithium silicate crystalline phases such as lithium metasilicate or lithium disilicate exhibit a size of 10 nm to 200 nm, and LAS crystalline phases such as virgilite or spodumene exhibit a size of 30 nm to 2 µm.

Since the crystalline phases having such sizes are formed, a glass-ceramic substrate with a light transmittance of at least 60% at a wavelength of 550 nm and a biaxial flexural strength of at least 120 MPa can be provided.

Meanwhile, referring to the results shown in FIGS. 4 and 5, it can be seen that the light transmittance increases with increasing temperature and processing time in the heat treatment steps, and the light transmittances of the respective products having undergone stage II, stage III, stage IV, and stage V are in descending order and all fall within the range of 82% to 69% at a wavelength of 550 nm. It can be seen that the samples in which lithium silicate-based crystals and/or LAS-based crystals are generated through any one of stage I to stage V exhibit a 1.5-fold to 4.3-fold increase in the biaxial flexural strength compared to the sample having only a glass phase (denoted by stage 0).

From these analysis results, it can be inferred that it is possible to manufacture glass-ceramic substrates with various combinations of flexural strength and light transmittance as desired depending on the use of the glass-ceramic substrates by using a bulk glass composition containing, by weight, 65.0% to 75% of SiO₂, 10.0% to 13.5% of Li₂O, 5% to 9% of Al₂O₃, 0.5% to 1.0% of ZnO, 1.5% to 3.5% of K₂O, 0% to 2.0% of CaO, and 2.5% to 4.0% of P₂O₅ and satisfying an SiO₂/Li₂O₃ molar ratio of 2.30 to 3.50 and an SiO₂/Al₂O₃ molar ratio of 14.50 to 20.50.

The glass-ceramic substrate that satisfies various combinations of flexural strength and light transmittance can be used as substrate glass to replace a glass substrate in an electrical circuit board, as a photosensitive glass-ceramic substrate, as a low-expansion transparent glass-ceramic substrate glass, as a substrate glass for a display unit, as a substrate glass for a diffuser plate, as a protective glass with resistance to contact damage, and as a display glass.

Specifically, the glass-ceramic substrate may be used as a flexible general-purpose panel in applications such as flexible and printed electronic devices, sensors for touch control panels, fingerprint sensors, thin film battery substrates, mobile electronics, semiconductor interposers, bendable displays, solar cells, or other applications that require a combination of high chemical stability, high temperature stability, low gas permeability, flexibility, and small thickness. Aside from consumer and industrial electronics (e.g. covers for flexible/foldable smartphones and tablets), the glass-ceramic substrate can be used for protective applications in industrial production or metrology. Additionally, the glass-ceramic substrate can be used as a back cover for mobile devices, such as smartphones, tablets, etc. and also as a diffuser for various applications.

In view of these uses, it is possible to provide a reinforced glass-ceramic substrate having the glass-ceramic substrate according to any of the above-described embodiments as a base plate. Herein, the reinforcement is understood to be chemical reinforcement or ionic reinforcement, but the invention is not limited thereto.

While the present invention has been described with reference to exemplary embodiments, those skilled in the art will appreciate that the exemplary embodiments are presented only for illustrative purposes and the present invention is not limited to the disclosed exemplary embodiments. On the contrary, it will be understood that various modifications and equivalents thereto are possible.

### Industrial Applicability

The present invention provides a method for easily manufacturing various types of glass-ceramic substrates having various combinations of flexural strength and light transmittance from a particular bulk glass composition, and a glass-ceramic substrate manufactured thereby. The glass-ceramic substrate can be used as a substrate glass to replace a glass substrate in an electrical circuit board, as a photosensitive glass-ceramic substrate, as a low-expansion transparent glass-ceramic substrate glass, as a substrate glass of a display unit, as a substrate glass of a diffuser plate, as a protective glass having resistance to contact damage, a display glass, and the like.

## Claims

1. A method of manufacturing a glass-ceramic substrate, the method comprising:
making a substrate having a predetermined shape by melting, shaping, and cooling a glass composition comprising, by weight, 65.0% to 75% of SiO₂, 10.0% to 13.5% of Li₂O, 5% to 9% of Al₂O₃, 0.5% to 1.0% of ZnO, 1.5% to 3.5% of K₂O, 0% to 2.0% of CaO, and 2.5% to 4.0% of P₂O₅ and satisfying a SiO₂/Li₂O₃ molar ratio of 2.30 to 3.50 and a SiO₂/Al₂O₃ molar ratio of 14.50 to 20.50, and by performing annealing at a predetermined rate from 480°C to 250°C for a duration of 20 minutes to 2 hours; and
heat-treating the substrate having the predetermined shape,
wherein the heat-treating is performed by one method selected from:
a) a first heat treatment step performed by a method of raising and maintaining the temperature within a maximum temperature range of 500°C to 650°C (exclusive);
b) a second heat treatment step performed by a method of raising and maintaining the temperature within a maximum temperature range of 650°C to 700°C (exclusive);
c) a third heat treatment step performed by a method of raising and maintaining the temperature within a maximum temperature range of 700°C to 800°C (exclusive); and
d) a fourth heat treatment step performed by a method of raising and maintaining the temperature within a maximum temperature range of 800°C to 870°C.

2. The method of claim 1, wherein in the heat-treating, the raising is performed at a temperature increase rate of 0.1°C/min to 30°C/min, and the maintaining is performed at the maximum temperature of the temperature range for at least 10 minutes.

3. A glass-ceramic substrate manufactured by performing the a) first heat treatment step of the method of claim 1, the glass-ceramic substrate comprising a crystalline phase in an amorphous glass matrix, wherein the crystalline phase is lithium methacrylate.

4. The glass-ceramic substrate of claim 3, wherein the glass-ceramic substrate has a crystallinity of 10% to 30%.

5. The glass-ceramic substrate manufactured by performing the b) second heat treatment step of the method of claim 1, the glass-ceramic substrate comprising a crystalline phase in an amorphous glass matrix, wherein the crystalline phase comprises lithium methacrylate and virgilite.

6. The glass-ceramic substrate of claim 5, wherein the glass-ceramic substrate has a crystallinity of 20% to 40%.

7. The glass-ceramic substrate manufactured by performing the c) third heat treatment step of the method of claim 1, the glass-ceramic substrate comprising a crystalline phase in an amorphous glass matrix, wherein the crystalline phase comprises lithium methacrylate, virgilite, and lithium disilicate.

8. The glass-ceramic substrate of claim 7, wherein the glass-ceramic substrate has a crystallinity of 40% to 60%.

9. The glass-ceramic substrate of claim 7, wherein in the c) third heat treatment step, as the temperature is increased from 700°C to 800°C, the lithium disilicate of the crystalline phase grows.

10. The glass-ceramic substrate of claim 9, wherein the glass-ceramic substrate has a crystallinity of 40% to 90%.

11. The glass-ceramic substrate manufactured by performing the d) fourth heat treatment step of the method of claim 1, the glass-ceramic substrate comprising a crystalline phase in an amorphous glass matrix, wherein the crystalline phase comprises lithium disilicate and spodumene.

12. The glass-ceramic substrate of claim 9, wherein the glass-ceramic substrate has a crystallinity of 58% to 80%.

13. The glass-ceramic substrate of any one of claims 3 to 12, wherein the glass-ceramic substrate has a light transmittance of at least 60% at a wavelength of 550 nm.

14. The glass-ceramic substrate of any one of claims 3 to 12, wherein the glass-ceramic substrate has a biaxial flexural strength of at least 120 MPa.

15. The glass-ceramic substrate of claim 3 or 4, wherein the light transmittance at a wavelength of 550 nm is in a range of 80% to 82%, and the biaxial flexural strength is in a range of 100 MPa to 140 MPa.

16. The glass-ceramic substrate of claim 5 or 6, wherein the glass-ceramic substrate has a light transmittance of 75% to 82% at a wavelength of 550 nm and a biaxial flexural strength of 130 to 170 MPa.

17. The glass-ceramic substrate of claim 7 or 8, wherein the glass-ceramic substrate has a light transmittance of 70% to 75% at a wavelength of 550 nm and a biaxial flexural strength of 200 to 250 MPa.

18. The glass-ceramic substrate of claim 9 or 10, wherein the glass-ceramic substrate has a light transmittance of 65% to 73% at a wavelength of 550 nm and a biaxial flexural strength of 280 to 320 MPa.

19. The glass-ceramic substrate of claim 11 or 12, wherein the glass-ceramic substrate has a light transmittance of 60% to 65% at a wavelength of 550 nm and a biaxial flexural strength of 330 to 370 MPa.

20. The glass-ceramic substrate of any one of claims 3 to 12, wherein the lithium methacrylate or lithium disilicate of the crystalline phase has a size of 10 nm to 200 nm and the virgilite or spodumene has a size of 30 nm to 2 pm.

21. A reinforced glass-ceramic substrate comprising the glass-ceramic substrate of any one of claims 3 to 12.

22. The reinforced glass-ceramic substrate of claim 21, wherein the reinforced glass-ceramic substrate is obtained by chemically enhancing or ionically reinforcing the glass-ceramic substrate.
